# FASCICULE DE BREVET EUROPEEN

(11) **EP 3 415 365 B1**
(45) Date de publication et mention de la délivrance du brevet: **09.03.2022**
(21) Numéro de dépôt: 18176356.6
(22) Date de dépôt: 06.06.2018
(51) Int. Cl.: B60P 3/39, A47C 17/80

(54) **SYSTEME DE GUIDAGE POUR UN MEUBLE DESTINE A ETRE MONTE EN TRANSLATION SUR UNE PAROI D'UN VEHICULE DE LOISIRS**
FÜHRUNGSSYSTEM FÜR EIN MÖBELSTÜCK ZUR VERSCHIEBBAREN MONTAGE AUF EINER WAND EINES FREIZEITFAHRZEUGS
GUIDE SYSTEM FOR A PIECE OF FURNITURE TO BE TRANSLATABLY INSTALLED ON A WALL OF A RECREATIONAL VEHICLE

(30) Priorité: 09.06.2017 FR 1755153
(43) Date de publication de la demande: 19.12.2018
(73) Titulaire: Trigano VDL, 75019 Paris (FR)
(72) Inventeur: CLEMENSON, Jérôme, 07290 ARDOIX (FR); PRAT, Isabelle, 26250 LIVRON (FR)
(74) Mandataire: Gevers & Orès

(56) Documents cités:
- EP-A1- 1 195 281
- EP-A1- 3 093 191
- US-A1- 2004 262 949

## Description

### DOMAINE TECHNIQUE

L'invention concerne le domaine des véhicules de loisirs, tels que les campingcars ou les caravanes, notamment celui de l'ameublement des véhicules de loisirs. Plus précisément, l'invention concerne un système de guidage pour un meuble destiné à être monté en translation sur une paroi d'un véhicule de loisirs suivant une ligne de translation.

### ETAT DE L'ART

Les véhicules de loisirs présentent un espace généralement réduit dans lequel doit être intégré le mobilier nécessaire au confort des utilisateurs.

Du fait de cet espace réduit, il est par exemple connu d'équiper ces véhicules de loisirs d'un lit coulissant suivant la direction verticale. Ainsi, lorsqu'un tel lit est escamoté au plafond, il permet de libérer un espace de vie appréciable pour les utilisateurs. Il peut en outre être descendu en position d'utilisation uniquement lorsque les utilisateurs en ont besoin.

De manière classique, un tel lit coulissant est en outre guidé en coulissement par l'intermédiaire d'un système de guidage comprenant des rails de guidage montés sur une paroi verticale du véhicule de loisirs et des organes de guidage qui sont fixés au lit et qui coopèrent avec les rails de guidage.

Les organes de guidage sont par exemple formés par des roulements. Les organes de guidage peuvent aussi être formés par des glissières de forme complémentaire avec les rails de guidage, le guidage du lit étant ainsi réalisé par glissement et non par roulement.

Or, de tels systèmes de guidage sont souvent trop rigides, de sorte qu'ils supportent difficilement les variations de jeu qui interviennent entre les organes de guidage fixés sur le lit et les rails de guidage, lorsque le lit coulisse entre sa position escamotée et sa position d'utilisation et qu'il est guidé par le système de guidage. Il en résulte que ces systèmes de guidage peuvent s'avérer bruyants, lorsque le lit coulisse entre sa position escamotée et sa position d'utilisation. Un tel exemple d'un tel dispositif à glissière est par exemple divulgué par les documents EP 3 093 191 A1.

Le document EP 1 195 281 A1 divulgue un système de guidage dont le patin ne coopère qu'avec un unique bord de rail de guidage.

### PRESENTATION DE L'INVENTION

La présente invention a pour but de pallier ces inconvénients en proposant un système de guidage comprenant un rail de guidage et un patin de guidage conçu pour glisser sur le système de guidage, le patin de guidage étant souple de sorte à s'adapter aux variations de jeu pouvant intervenir entre le rail de guidage et le patin de guidage, lorsque le patin de guidage glisse le long du rail de guidage.

Plus précisément, la présente invention a pour objet un système de guidage pour un meuble destiné à être monté en translation sur une paroi d'un véhicule de loisirs suivant une ligne de translation, ledit système comprenant :
- un rail de guidage destiné à être monté solidaire sur la paroi du véhicule de loisirs, le rail de guidage étant réalisé à partir d'un matériau rigide et comprenant un corps globalement tubulaire, creux, s'étendant suivant une ligne d'extension longitudinale confondue avec la ligne de translation,
   le corps comprenant une rainure s'étendant suivant la ligne d'extension longitudinale et donnant accès à l'intérieur du corps suivant une première direction transversale, sensiblement perpendiculaire à la ligne d'extension longitudinale,
- un patin de guidage destiné à être monté sur le meuble et conçu pour être monté glissant sur le rail de guidage suivant la ligne d'extension longitudinale, de sorte à guider le meuble en translation suivant la ligne d'extension longitudinale, lorsque le patin de guidage est monté solidaire sur le meuble, le patin de guidage étant réalisé à partir d'un matériau souple,
le patin de guidage comprenant :
- une première paire d'ailettes conçues pour glisser le long d'un premier bord longitudinal de la rainure du rail de guidage, une ailette, dite ailette intérieure, de la première paire étant située à l'intérieur du corps du rail de guidage, l'autre ailette, dite ailette extérieure, de la première paire étant située à l'extérieur du corps du rail de guidage, lorsque le patin de guidage est monté glissant sur le rail de guidage, les ailettes de la première paire étant en outre aptes à se déformer élastiquement suivant la première direction transversale, lorsque le patin de guidage est monté glissant sur le rail de guidage et qu'il glisse le long dudit rail de guidage, et
- le patin de guidage comprend une deuxième paire d'ailettes conçues pour glisser le long d'un deuxième bord longitudinal de la rainure du rail de guidage, agencé en regard du premier bord longitudinal, une ailette, dite ailette intérieure, de la deuxième paire étant située à l'intérieur du corps du rail de guidage, l'autre ailette, dite ailette extérieure, de la deuxième paire étant située à l'extérieur du corps du rail de guidage, lorsque le patin de guidage est monté glissant sur le rail de guidage ;

Selon différents modes de réalisation de l'invention, qui pourront être pris ensemble ou séparément conformément aux revendications :
- les ailettes de la deuxième paire sont en outre aptes à se déformer élastiquement en flexion suivant la première direction transversale, lorsque le patin de guidage est monté glissant sur le rail de guidage et qu'il glisse le long dudit rail de guidage ;
- les ailettes de la première paire sont en contact avec le premier bord longitudinal de la rainure du rail de guidage, l'une avec une surface intérieure du premier bord longitudinal, l'autre avec une surface extérieure du premier bord longitudinal, de sorte à pincer élastiquement le premier bord longitudinal de la rainure du rail de guidage,
   ou
les ailettes de chacune des première et deuxième paires sont en contact avec le premier bord longitudinal ou le deuxième bord longitudinal de la rainure du rail de guidage, l'une avec une surface intérieure du premier bord longitudinal ou du deuxième bord longitudinal, l'autre avec une surface extérieure du premier bord longitudinal ou du deuxième bord longitudinal, de sorte à pincer élastiquement le premier bord longitudinal ou le deuxième bord longitudinal de la rainure du rail de guidage ;
- le patin de guidage comprend un élément de liaison s'étendant suivant la première direction transversale, lorsque le patin de guidage est monté glissant sur le rail de guidage ;
- les ailettes de la première paire s'étendent en regard l'une de l'autre, entre une base située au niveau de l'élément de liaison et une extrémité libre, suivant une deuxième direction transversale, sensiblement perpendiculaire à la première direction transversale et à la ligne d'extension longitudinale, lorsque le patin de guidage est monté glissant sur le rail de guidage,
   ou
   les ailettes de chaque paire s'étendent en regard l'une de l'autre, entre une base située au niveau de l'élément de liaison et une extrémité libre, suivant la deuxième direction transversale, dans un sens opposé par rapport à l'autre paire d'ailettes, lorsque le patin de guidage est monté glissant sur le rail de guidage ;
- les extrémités libres des ailettes de la première paire ou de chaque paire sont plus proches l'une de l'autre que les bases desdites ailettes, de sorte que chacune des ailettes de la première paire ou de chaque paire glisse sur le rail de guidage par l'intermédiaire de son extrémité libre ;
- les ailettes de la première paire ou de chaque paire sont courbées dans un sens opposé l'une par rapport à l'autre suivant la première direction transversale, lorsque le patin de guidage est monté glissant sur le rail de guidage ;
- le patin de guidage comprend un premier élément de blocage conçu pour bloquer la déformation élastique de la ou de chacune des ailettes intérieures suivant la première direction transversale, dans un sens opposé à la ou aux ailettes extérieures, lorsque le patin de guidage est monté glissant sur le rail de guidage et qu'il glisse le long dudit rail de guidage ;
- le premier élément de blocage comprend une première nervure s'étendant depuis l'élément de liaison dans un sens opposé à la ou aux ailettes extérieures, par rapport à la ou aux ailettes intérieures, la première nervure comprenant une surface de blocage agencée en regard de la ou de chacune des ailettes intérieures et conçue pour bloquer la déformation élastique de la ou de chacune des ailettes intérieures suivant la première direction transversale, dans un sens opposé à la ou aux ailettes extérieures, lorsque le patin de guidage est monté glissant sur le rail de guidage et qu'il glisse le long dudit rail de guidage ;
- le patin de guidage comprend un deuxième élément de blocage conçu pour bloquer la déformation élastique de la ou de chacune des ailettes extérieures suivant la première direction transversale, dans un sens opposé à la ou aux ailettes intérieures, lorsque le patin de guidage est monté glissant sur le rail de guidage et qu'il glisse le long dudit rail de guidage ;
- le patin de guidage comprend un support conçu pour être monté sur le meuble et à partir duquel s'étend l'élément de liaison, le deuxième élément de blocage comprenant une deuxième nervure s'étendant depuis le support vers les ailettes et comprenant elle-même une surface de blocage agencée en regard de la ou de chacune des ailettes extérieures et conçue pour bloquer la déformation élastique de la ou de chacune des ailettes extérieures suivant la première direction transversale, dans un sens opposé à la ou aux ailettes intérieures, lorsque le patin de guidage est monté glissant sur le rail de guidage et qu'il glisse le long dudit rail de guidage ;
- la ou les surfaces de blocage de la première nervure et/ou de la deuxième nervure sont concaves ;
- les extrémités libres des ailettes de la première paire et/ou de la deuxième paire comprennent une surface biseautée à chacune de leurs extrémités suivant la ligne longitudinale, lorsque le patin de guidage est monté glissant sur le rail de guidage ;
- le corps du rail de guidage comprend une paroi de fond, une paroi de guidage accueillant la rainure, opposée à ladite paroi de fond, et une paire de parois latérales reliant la paroi de fond à la paroi de guidage ;
- le patin de guidage comprend une paire de branches, chacune des branches de ladite paire étant conçue pour glisser le long d'une surface intérieure d'une des parois latérales du corps du rail de guidage, lorsque le patin de guidage est monté glissant sur le rail de guidage,
- lesdites branches sont aptes à se déformer élastiquement en flexion suivant une deuxième direction transversale, sensiblement perpendiculaire à la première direction transversale et à la ligne d'extension longitudinale, lorsque le patin de guidage est monté glissant sur le rail de guidage et qu'il glisse le long dudit rail de guidage ;
- chacune des branches est en contact avec la surface intérieure de la paroi latérale qui lui est associée ;
- les ailettes de la première paire et les ailettes de la deuxième paire s'étendent depuis ledit élément de liaison, dans un sens opposé, suivant la deuxième direction transversale ;
- la paire de branches est agencée d'un côté opposé aux ailettes extérieures par rapport aux ailettes intérieures ;
- chacune des branches comprend une première portion s'étendant depuis l'élément de liaison, dans un sens opposé l'une par rapport à l'autre, suivant la deuxième direction transversale ;
- chacune des branches comprend une deuxième portion s'étendant depuis une extrémité de la première portion opposée à l'élément de liaison, dans une direction opposée à l'ailette intérieure qui lui est adjacente, vers une extrémité libre ;
- les deuxièmes portions des branches peuvent être courbées l'une vers l'autre suivant la deuxième direction transversale, lorsque le patin de guidage est monté glissant sur le rail de guidage ;
- les extrémités libres de chacune des branches comprennent une surface biseautée à chacune de leurs extrémités suivant la ligne longitudinale, lorsque le patin de guidage est monté glissant sur le rail de guidage.

L'invention a aussi pour objet un sous-ensemble comprenant un meuble destiné à être monté en translation sur une paroi d'un véhicule de loisirs suivant une ligne de translation et au moins un système de guidage tel que précédemment décrit, comportant un patin monté solidaire sur le meuble.

L'invention a encore pour objet un ensemble comprenant :
- un véhicule de loisirs comprenant une paroi,
- au moins un meuble,
- au moins un système de guidage tel que décrit précédemment, le rail de guidage étant monté solidaire sur la paroi du véhicule de loisirs, le patin de guidage étant monté solidaire sur le meuble, le patin de guidage étant en outre monté glissant sur le rail de guidage suivant la ligne d'extension longitudinale.

### PRESENTATION DES FIGURES

D'autres caractéristiques et avantages de l'invention apparaîtront à la lecture de la description détaillée qui suit pour la compréhension de laquelle on se reportera aux figures annexées parmi lesquelles :
- la figure 1 est une vue en perspective d'un ensemble comprenant un système de guidage selon un mode de réalisation de l'invention, un meuble et un véhicule de loisirs, le système de guidage étant monté d'une part sur le meuble et d'autre part sur une paroi du véhicule de loisirs ;
- la figure 2 est une vue en perspective du système de guidage illustré à la figure 1, lorsqu'il est monté sur le meuble ;
- la figure 3 est une vue de dessus du système de guidage illustré à la figure 2, lorsqu'il est monté sur le meuble ;
- la figure 4 est une vue en perspective, partielle, d'un système de guidage selon un autre mode de réalisation de l'invention ;
- la figure 5 est une vue de dessus du système de guidage illustré à la figure 4, lorsqu'il est monté sur le meuble,
- la figure 6 est une vue en perspective, partielle, d'une variante de réalisation du système de guidage illustré aux figures 4 et 5.

### DESCRIPTION DETAILLEE

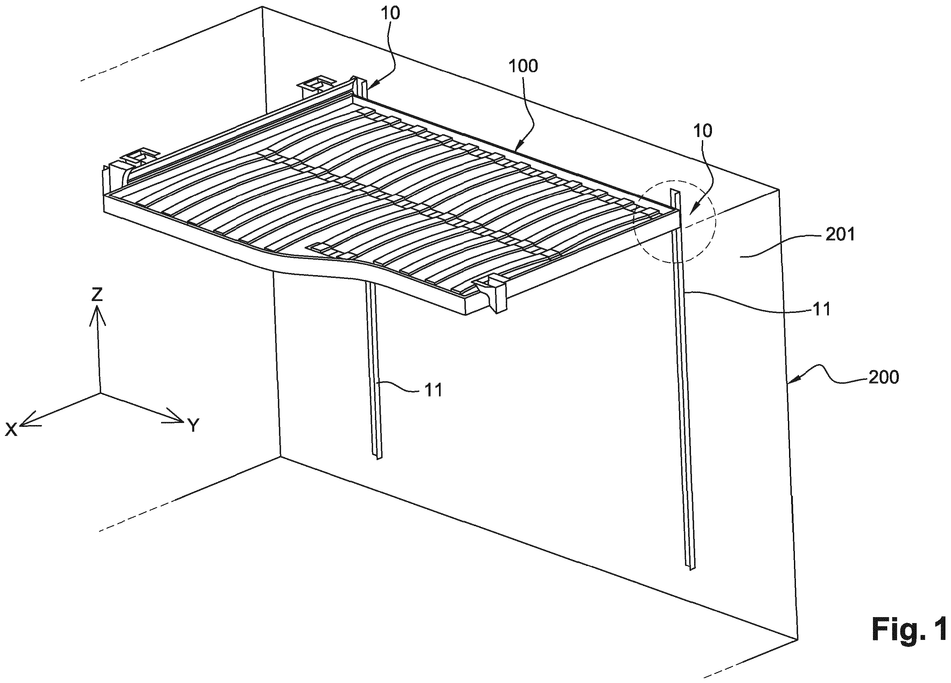

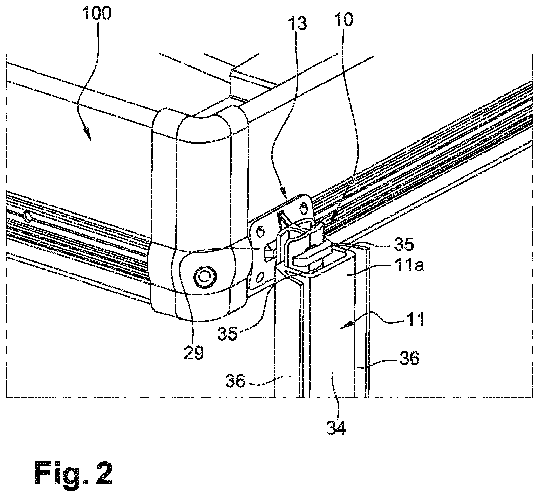

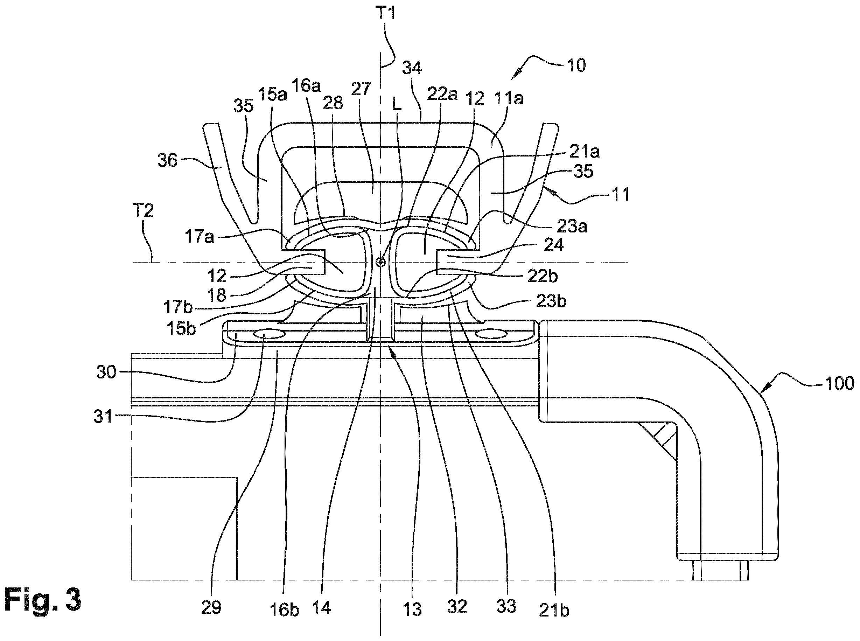

Les figures 1 à 3 montrent un système de guidage 10 selon un premier mode de réalisation de l'invention, pour au moins un meuble 100 destiné à être monté en translation sur une paroi 201 d'un véhicule de loisirs 200 suivant une ligne de translation.

On adoptera à titre non limitatif un repère global comportant un plan horizontal, parallèle au plancher du véhicule de loisirs 200 et une direction verticale, dirigée de bas en haut, indiquées par le trièdre X, Y, Z.

On adoptera aussi un repère local applicable au système de guidage 10 et comportant des orientations indiquées par le repère L, T1, T2. A titre non limitatif, l'orientation longitudinale L du repère local correspond ici à l'orientation verticale Z du repère global.

Le système de guidage 10 comprend un rail de guidage 11 destiné à être monté solidaire sur la paroi 201 du véhicule de loisirs 200.

Le rail de guidage 11 est réalisé à partir d'un matériau rigide, par exemple en un matériau métallique tel que de l'aluminium ou l'acier. Autrement dit, le rail de guidage 11 est peu déformable élastiquement.

Le rail de guidage 11 comprend un corps 11a de forme globalement tubulaire, creuse, s'étendant suivant une ligne d'extension longitudinale L confondue avec la ligne de translation.

Le corps 11a du rail de guidage 11 comprend en outre une rainure 12 s'étendant suivant la ligne d'extension longitudinale L et donnant accès à l'intérieur du corps 11a du rail de guidage 11 suivant une première direction transversale T1, sensiblement perpendiculaire à la ligne d'extension longitudinale L.

Le système de guidage 10 comprend aussi au moins un patin de guidage 13 destiné à être monté sur le meuble 100.

Le patin de guidage 13 est réalisé à partir d'un matériau souple. Autrement dit, le patin de guidage 13 est déformable élastiquement en flexion, notamment comparativement au rail de guidage 11.

Le patin de guidage 13 est conçu pour être monté glissant sur le rail de guidage 11 suivant la ligne d'extension longitudinale L, de sorte à guider le meuble 100 en translation suivant la ligne d'extension longitudinale L, lorsque le patin de guidage 13 est monté solidaire sur le meuble 100.

Le patin de guidage 13 comprend en outre une première paire d'ailettes 15a, 15b conçues pour glisser le long d'un premier bord longitudinal 18 de la rainure 12 du rail de guidage 11, une ailette 15a, dite ailette intérieure, de la première paire étant située à l'intérieur du corps 11adu rail de guidage 11, l'autre ailette 15b, dite ailette extérieure, de la première paire étant quant à elle située à l'extérieur du corps 11adu rail de guidage 11, lorsque le patin de guidage 13 est monté glissant sur le rail de guidage 11. Les ailettes 15a, 15b de la première paire glissent ainsi le long du premier bord longitudinal 18 de la rainure 12 du rail de guidage 11 suivant la ligne d'extension longitudinale L.

Les ailettes 15a, 15b de la première paire sont en outre aptes à se déformer élastiquement en flexion suivant la première direction transversale T1, lorsque le patin de guidage 13 est monté glissant sur le rail de guidage 11 et qu'il glisse le long dudit rail de guidage 11.

De cette manière, les ailettes 15a, 15b de la première paire peuvent s'adapter aux variations de jeu suivant la première direction transversale T1 entre le patin de guidage 13 et le rail de guidage 11 en se déformant élastiquement, lorsque le patin de guidage 13 glisse le long du rail de guidage 11. Cela permet notamment de réduire le bruit produit par le système de guidage 10, lorsque le patin de guidage 13 glisse le long du rail de guidage 11. En outre, l'élasticité en flexion des ailettes 15a, 15b de la première paire permet de maintenir le pincement du premier bord longitudinal 18 malgré les variations de jeu.

Les ailettes 15a, 15b de la première paire sont par exemple en contact avec le premier bord longitudinal 18 de la rainure 12 du rail de guidage 11, l'une avec une surface intérieure du premier bord longitudinal 18, l'autre avec une surface extérieure du premier bord longitudinal 18, de sorte à pincer élastiquement le premier bord longitudinal 18 de la rainure 12 du rail de guidage 11.

De cette manière, les ailettes 15a, 15b de la première paire sont précontraintes en flexion, lorsque le patin de guidage 13 est monté glissant sur le rail de guidage 11. Ainsi, lorsque le patin de guidage 13 est monté glissant sur le rail de guidage 11, les ailettes 15a, 15b de la première paire sont rappelées élastiquement l'une vers l'autre pour pincer le premier bord longitudinal 18 de la rainure 12 du rail de guidage 11. Cela permet aussi de maintenir le pincement du premier bord longitudinal 18 malgré les variations de jeu.

Le patin de guidage 13 comprend par exemple un élément de liaison 14 central s'étendant suivant la première direction transversale T1, lorsque le patin de guidage 13 est monté glissant sur le rail de guidage 11. L'élément de liaison 14 est agencé en travers de la rainure 12.

Les ailettes 15a, 15b de la première paire s'étendent par exemple en regard l'une de l'autre suivant une deuxième direction transversale T2 depuis l'élément de liaison 14. La deuxième direction transversale T2 est sensiblement perpendiculaire à la première direction transversale T1 et à la ligne d'extension longitudinale L, lorsque le patin de guidage 13 est monté glissant sur le rail de guidage 11.

Les ailettes 15a, 15b de la première paire s'étendent suivant la deuxième direction transversale T2 entre une base 16a, 16b située au niveau de l'élément de liaison 14 et une extrémité libre 17a, 17b.

Les extrémités libres 17a, 17b des ailettes 15a, 15b de la première paire peuvent en outre être plus proches l'une de l'autre que les bases 16a, 16b desdites ailettes 15a, 15b de la première paire, de sorte que chacune des ailettes 15a, 15b de la première paire glisse le long du premier bord longitudinal 18 de la rainure 12 du rail de guidage 11 par l'intermédiaire desdites extrémités libres 17a, 17b.

Autrement dit, chaque ailette 15a, 15b de la première paire est globalement inclinée depuis l'élément de liaison 14 en direction de l'autre ailette 15b, 15a de la première paire.

De cette manière, les ailettes 15a, 15b de la première paire présentent la forme d'une pince, enserrant entre leur extrémité libre 17a, 17b le premier bord longitudinal 18 de la rainure 12 du rail de guidage 11 et pouvant se déformer élastiquement en flexion depuis leur extrémité libre 17a, 17b vers leur base 16a, 16b respective. En d'autres termes, la forme de pince des ailettes 15a, 15b de la première paire permet notamment de conférer de l'élasticité auxdites ailettes 15a, 15b, qui peuvent ainsi se déformer élastiquement, lorsque le patin de guidage 13 glisse le long du rail de guidage 11.

Les ailettes 15a, 15b de la première paire peuvent en outre être courbées ou encore arquées dans un sens opposé l'une par rapport à l'autre suivant la première direction transversale T1, lorsque le patin de guidage 13 est monté glissant sur le rail de guidage 11.

Autrement dit, du point de vue d'une des ailettes 15a, 15b de la première paire, l'autre ailette 15b, 15a est concave.

La courbure des ailettes 15a, 15b de la première paire permet de donner de l'élasticité auxdites ailettes 15a, 15b, qui peuvent de cette manière se déformer élastiquement pour s'adapter aux variations de jeu entre le patin de guidage 13 et le rail de guidage 11 suivant la première direction transversale T1, lorsque le patin de guidage 13 glisse le long du rail de guidage 11.

Le premier bord longitudinal 18 est par exemple agencé à distance de l'élément de liaison 14, lorsque le patin de guidage 13 est monté glissant sur le rail de guidage 11.

De cette manière, le patin de guidage 13 peut aussi s'adapter aux variations de jeu suivant la deuxième direction transversale T2.

La ligne d'extension longitudinale L peut être rectiligne ou encore curviligne. Lorsque la ligne d'extension longitudinale L est rectiligne, elle est par exemple confondue avec une direction d'extension longitudinale L.

La ligne d'extension longitudinale L peut ou non être contenue dans un plan.

La direction d'extension longitudinale L peut être verticale, les première et deuxième directions transversales T1, T2 étant horizontales.

La direction d'extension longitudinale L peut aussi être horizontale, la première ou la deuxième direction transversale T1, T2 étant horizontale et la deuxième ou la première direction transversale T2, T1 étant verticale.

La direction d'extension longitudinale L peut encore être inclinée par rapport à l'horizontale.

Le patin de guidage 13 comprend une deuxième paire d'ailettes 21a, 21b conçues pour glisser le long d'un deuxième bord longitudinal 24 de la rainure 12 du rail de guidage 11, agencé en regard du premier bord longitudinal 18. Une ailette 21a, dite ailette intérieure, de la deuxième paire est située à l'intérieur du corps 11adu rail de guidage 11, l'autre ailette 21b, dite ailette extérieure, de la deuxième paire étant quant à elle située à l'extérieur du corps 11a du rail de guidage 11, lorsque le patin de guidage 13 est monté glissant sur le rail de guidage 11. Les ailettes 21a,21bde la deuxième paire glissent ainsi le long du deuxième bord longitudinal 24 de la rainure 12 du rail de guidage 11 suivant la ligne d'extension longitudinale L.

Les ailettes 21a,21bde la deuxième paire sont en outre aptes à se déformer élastiquement en flexion suivant la première direction transversale T1, lorsque le patin de guidage 13 est monté glissant sur le rail de guidage 11 et qu'il glisse le long dudit rail de guidage 11.

De cette manière, les ailettes 15a, 15b, 21a, 21bde la première et de la deuxième paires peuvent s'adapter aux variations de jeu suivant la première direction transversale T1 entre le patin de guidage 13 et le rail de guidage 11 en se déformant élastiquement, lorsque le patin de guidage 13 glisse le long du rail de guidage 11. Cela permet notamment de réduire le bruit produit par le système de guidage 10, lorsque le patin de guidage 13 glisse le long du rail de guidage 11. En outre, l'élasticité en flexion des ailettes 15a, 15b, 21a, 21b des première et deuxième paires permet de maintenir respectivement le pincement du premier et du deuxième bords longitudinaux 18, 24 malgré les variations de jeu.

Les ailettes 15a, 15b, 21a,21bde la première et de la deuxième paires empêchent aussi, dans la limite de leur élasticité, le patin de guidage 13 de se libérer du rail de guidage 11 par translation suivant la première direction transversale T1.

Les ailettes 21a,21bde la deuxième paire sont en contact avec le deuxième bord longitudinal 24 de la rainure 12 du rail de guidage 11, l'une avec une surface intérieure du deuxième bord longitudinal 24, l'autre avec une surface extérieure du deuxième bord longitudinal 24, de sorte à pincer élastiquement le deuxième bord longitudinal 24 de la rainure 12 du rail de guidage 11.

De cette manière, les ailettes 21a,21b de la deuxième paire sont précontraintes en flexion, lorsque le patin de guidage 13 est monté glissant sur le rail de guidage 11. Ainsi, lorsque le patin de guidage 13 est monté glissant sur le rail de guidage 11, les ailettes 21a,21bde la première paire sont rappelées élastiquement l'une vers l'autre pour pincer le deuxième bord longitudinal 24 de la rainure 12 du rail de guidage 11.

Les ailettes 21a,21bde la deuxième paire s'étendent par exemple en regard l'une de l'autre depuis l'élément de liaison 14, entre une base 22a, 22b située au niveau de l'élément de liaison 14 et une extrémité libre 23a, 23b, suivant la deuxième direction transversale T2 dans un sens opposé aux ailettes 15a, 15b de la première paire.

Les extrémités libres 23a, 23b des ailettes 21a,21bde la deuxième paire peuvent être plus proches l'une de l'autre que les bases 22a, 22b desdites ailettes 21a,21bde la deuxième paire, de sorte que chacune des ailettes 21a,21bde la deuxième paire glisse le long du deuxième bord longitudinal 24 de la rainure 12 du rail de guidage 11 par l'intermédiaire desdites extrémités libres 23a, 23b.

Autrement dit, chaque ailette 21a,21bde la deuxième paire est globalement inclinée depuis l'élément de liaison 14 en direction de l'autre ailette 21b, 21a de la deuxième paire.

De cette manière, les ailettes 21a, 21b de la deuxième paire présentent la forme d'une pince, enserrant entre leur extrémité libre 23a, 23b le deuxième bord longitudinal 24 de la rainure 12 du rail de guidage 11 et pouvant de déformer élastiquement depuis leur extrémité libre 23a, 23b vers leur base 22a, 22b respective. En d'autres termes, la forme de pince des ailettes 21a,21bde la deuxième paire permet notamment de conférer de l'élasticité auxdites ailettes 21a,21b, qui peuvent ainsi se déformer élastiquement, lorsque le patin de guidage 13 glisse le long du rail de guidage 11. Cela permet aussi de maintenir le pincement des premier et deuxième bords longitudinaux 18, 24 malgré les variations de jeu.

Les ailettes 21a,21bde la deuxième paire peuvent en outre être courbées ou encore arquées dans un sens opposé l'une par rapport à l'autre suivant la première direction transversale T1, lorsque le patin de guidage 13 est monté glissant sur le rail de guidage 11.

Autrement dit, du point de vue d'une des ailettes 21a, 21b de la deuxième paire, l'autre ailette 21b, 21a est concave.

La courbure des ailettes 21a,21bde la deuxième paire permet de donner de l'élasticité auxdites ailettes 21a,21b, qui peuvent de cette manière se déformer élastiquement pour s'adapter aux variations de jeu suivant la première direction transversale T1 entre le patin de guidage 13 et le rail de guidage 11, lorsque le patin de guidage 13 glisse le long du rail de guidage 11.

Le deuxième bord longitudinal 24 est par exemple agencé à distance de l'élément de liaison 14, lorsque le patin de guidage 13 est monté glissant sur le rail de guidage 11.

De cette manière, le patin de guidage 13 peut aussi s'adapter aux variations de jeu suivant la deuxième direction transversale T2.

Les extrémités libres 17a, 17b, 23a, 23b des ailettes 15a, 15b, 21a,21bde la première paire et/ou de la deuxième paire comprennent par exemple une surface biseautée à chacune de leurs extrémités suivant la ligne longitudinale L, lorsque le patin de guidage 13 est monté glissant sur le rail de guidage 11. Les surfaces biseautées permettent de guider le rail de guidage 11 par rapport au patin de guidage 13, lors de leur montage l'un avec l'autre et ainsi de le faciliter.

Le patin de guidage 13 comprend par exemple un premier élément de blocage 27 conçu pour limiter la déformation élastique de la ou de chacune des ailettes intérieures 15a, 21a suivant la première direction transversale T1, dans un sens opposé à la ou aux ailettes extérieures 15b, 21b, lorsque le patin de guidage 13 est monté glissant sur le rail de guidage 11 et qu'il glisse le long dudit rail de guidage 11.

De cette manière, le premier élément de blocage 27 limite la déformation élastique de la ou de chacune des ailettes intérieures 15a, 21a dans un sens opposé à la ou aux ailettes extérieures 15b, 21b, lorsque le patin de guidage 13 glisse le long du rail de guidage 11, et évite ainsi que la ou les ailettes intérieures 15a, 21a ne se cassent. Ceci évite aussi que les ailettes intérieures 15a, 21a ne se déforment jusqu'à sortir du rail de guidage 11.

Le premier élément de blocage 27 peut comprendre une première nervure s'étendant depuis l'élément de liaison 14 suivant la première direction transversale T1 dans un sens opposé à la ou aux ailettes extérieures 15b, 21b, par rapport aux ailettes intérieures 15a, 21a.

La première nervure 27 comprend une surface de blocage 28 agencée en regard de la ou de chacune des ailettes intérieures 15a, 21a et conçue pour limiter la déformation élastique de la ou des ailettes intérieures 15a, 21a suivant la première direction transversale T1, dans un sens opposé à la ou aux ailettes extérieures 15b, 21b, lorsque le patin de guidage 13 est monté glissant sur le rail de guidage 11 et qu'il glisse le long dudit rail de guidage 11.

La ou les surfaces de blocage 28 de la première nervure 27 sont par exemple concaves, notamment lorsque la ou les ailettes intérieures 15a, 21a sont courbées, de manière à épouser la forme de la ou des ailettes intérieures 15a, 21a, lorsque le patin de guidage 13 est monté glissant sur le rail de guidage 11 et glisse le long dudit rail de guidage 11 et que la ou les ailettes intérieures 15a, 21a se déforment élastiquement suivant la première direction transversale T1 dans un sens opposé à la ou aux ailettes extérieures 15b, 21b.

Le patin de guidage 13 peut aussi comprendre un support 29 conçu pour être monté solidaire sur le meuble 100.

Le support 29 présente par exemple la forme d'une plaque agencée perpendiculairement à la première direction transversale T1, lorsque le patin de guidage 23 est monté glissant sur le rail de guidage 11.

Le support 29 comprend une première surface conçue pour être en contact avec le meuble 100 et une deuxième surface 30 opposée à partir de laquelle s'étend l'élément de liaison 14.

Le support 29 est par exemple fixé au meuble 100 par l'intermédiaire d'une ou plusieurs ouvertures 31 réalisées dans le support 29, en correspondance avec des ouvertures réalisées dans le meuble 100, et accueillant chacune une vis.

Le patin de guidage 13 peut en outre comprendre un deuxième élément de blocage 32 conçu pour bloquer la déformation élastique de la ou de chacune des ailettes extérieures 15b, 21bsuivant la première direction transversale T1, dans un sens opposé à la ou aux ailettes intérieures 15a, 21a,lorsque le patin de guidage 13 est monté glissant sur le rail de guidage 11 et qu'il glisse le long dudit rail de guidage 11.

De cette manière, le deuxième élément de blocage 32 limite la déformation élastique de la ou de chacune des ailettes extérieures 15b, 21bdans un sens opposé à la ou aux ailettes intérieures 15a, 21a,lorsque le patin de guidage 13 glisse le long du rail de guidage 11, et évite ainsi que la ou les ailettes extérieures 15b, 21bne se cassent.

Le deuxième élément de blocage 32 peut comprendre une deuxième nervure s'étendant depuis le support 29, le cas échéant depuis la deuxième surface 30 du support 29, vers les ailettes 15a, 15b, 21a,21b.

La deuxième nervure 32 comprend une surface de blocage 33 agencée en regard de la ou de chacune des ailettes extérieures 15b, 21b et conçue pour limiter la déformation élastique de la ou des ailettes extérieures 15b, 21bsuivant la première direction transversale T1, dans un sens opposé à la ou aux ailettes intérieures 15a, 21a, lorsque le patin de guidage 13 est monté glissant sur le rail de guidage 11 et qu'il glisse le long dudit rail de guidage 11.

La ou les surfaces de blocage 33 de la deuxième nervure 32 sont par exemple concaves, notamment lorsque la ou les ailettes extérieures 15b, 21bsont courbées, de manière à épouser la forme de la ou des ailettes extérieures 15b, 21b, lorsque le patin de guidage 13 est monté glissant sur le rail de guidage 11 et glisse le long dudit rail de guidage 11 et que la ou les ailettes extérieures 15b, 21bse déforment élastiquement suivant la première direction transversale T1 dans un sens opposé à la ou aux ailettes intérieures 15a, 21a.

Le patin de guidage 13 est par exemple réalisé à partir d'une matière plastique ou d'un matériau élastomère.

La matière plastique comprend par exemple de l'acrylonitrile butadiène styrène (aussi appelé « ABS »), un polyamide (aussi appelé « PA »), du polyéthylène (aussi appelé « PE »), du polyoxyméthylène (aussi appelé «polyformaldéhyde » ou « polyacétal » ou encore « POM »), du polypropylène (aussi appelé « PP »), du polystyrène (aussi appelé « PS ») ou encore du polychlorure de vinyle (aussi appelé « PVC »).

On comprendra que malgré leur élasticité en flexion, le corps des ailettes 15a, 15b, 21a,21bprésente une rigidité suffisamment élevée pour réaliser la fonction de guidage du meuble 100.

Le corps 11adu rail de guidage 11 présente par exemple une section de forme quadrilatérale, par exemple de forme rectangulaire ou encore carrée.

Le corps 11adu rail de guidage 11 comprend par exemple une paroi de fond 34, une paroi de guidage opposée accueillant la rainure 12 et une paire de parois latérales 35 reliant la paroi de fond 34 à la paroi de guidage.

Le rail de guidage 11 est par exemple fixé à la paroi 201 du véhicule de loisirs par l'intermédiaire de la paroi de fond 34 du corps 11adudit rail de guidage 11. Pour cela, la paroi de fond 34 comprend par exemple une ou plusieurs ouvertures réalisées en correspondance avec des ouvertures réalisées dans la paroi 201 et accueillant chacune une vis.

Le rail de guidage 11 comprend par exemple des ailes 36 s'étendant chacune depuis un coin formé entre la paroi de guidage et l'une des parois latérales 35, en direction de la paroi 201 du véhicule de loisirs 200, lorsque le rail de guidage 11 est monté solidaire sur ladite paroi 201. Les ailes 36 viennent en appui contre la paroi 201 du véhicule de loisirs 200, lorsque le rail de guidage 11 est monté solidaire sur la paroi 201 du véhicule de loisirs 200.

Les extrémités du corps 11adu rail de guidage 11 suivant la ligne d'extension longitudinale L sont par exemple ouvertes afin de donner accès à l'intérieur du corps 11adu rail de guidage 11 suivant la ligne d'extension longitudinale L et ainsi de permettre le montage du patin de guidage 13 sur le rail de guidage 11 par lesdites extrémités du corps 11a du rail de guidage 11.

Le rail de guidage 11 est par exemple réalisé à partir d'aluminium ou d'acier.

Le rail de guidage 11 peut encore être réalisé à partir d'une matière plastique.

La matière plastique comprend par exemple de l'acrylonitrile butadiène styrène (aussi appelé « ABS »), un polyamide (aussi appelé « PA »), du polyéthylène (aussi appelé « PE »), du polyoxyméthylène (aussi appelé « polyformaldéhyde » ou « polyacétal » ou encore « POM »), du polypropylène (aussi appelé « PP »), du polystyrène (aussi appelé « PS »), ou encore du polychlorure de vinyle (aussi appelé « PVC »).

Plusieurs patins de guidage 13 peuvent être montés glissant sur le rail de guidage 11, chacun des patins de guidage 13 pouvant être monté au même meuble 100 ou à un meuble différent.

Le meuble 100 peut être un lit, notamment un sommier de lit, ou encore une table. Le meuble 100 peut aussi être une banquette, un plan de travail, un tiroir ou un placard. Dans l'exemple illustré aux figures 1 à 3, le meuble 100 est un lit.

La paroi 201 du véhicule de loisirs 200 peut être verticale, telle qu'une paroi avant ou arrière ou encore une paroi latérale du véhicule de loisirs 200.

La paroi 201 du véhicule de loisirs 200 peut aussi être horizontale, telle qu'un plancher du véhicule de loisirs 200.

La paroi 201 du véhicule de loisirs 200 peut encore être inclinée par rapport à l'horizontale.

Le véhicule de loisirs 200 peut être une caravane ou encore un camping-car.

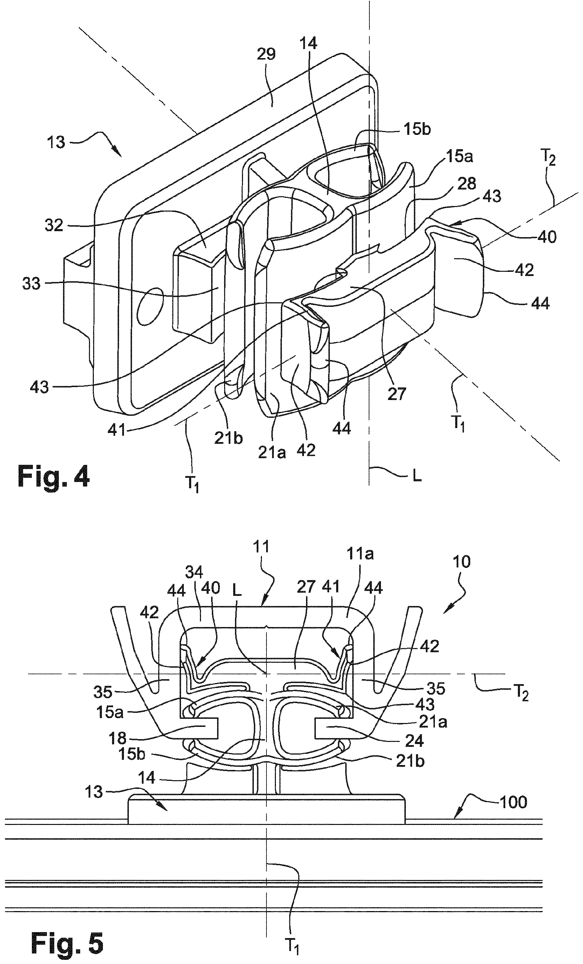

Les figures 4 et 5 montrent un système de guidage 10 selon un deuxième mode de réalisation de l'invention. Les éléments communs avec le premier mode de réalisation portent les mêmes références et ne seront pas à nouveau détaillés ici.

Le système de guidage 10 comprend une paire de branches 40, 41, chacune des branches 40, 41 de ladite paire étant conçue pour glisser le long d'une surface intérieure d'une des parois latérales 35 du corps 11adu rail de guidage 11, lorsque le patin de guidage 13 est monté glissant sur le rail de guidage 11.

Les branches 40, 41 sont en outre aptes à se déformer élastiquement en flexion suivant la deuxième direction transversale T2, lorsque le patin de guidage 13 est monté glissant sur le rail de guidage 11 et qu'il glisse le long dudit rail de guidage 11.

De cette manière, les branches 40, 41 peuvent s'adapter aux variations de jeu suivant la deuxième direction transversale T2 entre le patin de guidage 13 et le rail de guidage 11 en se déformant élastiquement, lorsque le patin de guidage 13 glisse le long du rail de guidage 11. Cela permet notamment de réduire le bruit produit par le système de guidage 10, lorsque le patin de guidage 13 glisse le long du rail de guidage 11.

Les branches 40, 41 sont par exemple chacune en contact avec la surface intérieure d'une des parois latérales 35. Les branches 40, 41 sont de cette manière précontraintes en flexion, lorsque le patin de guidage 13 est monté glissant sur le rail de guidage 11. Ainsi, lorsque le patin de guidage 13 est monté glissant sur le rail de guidage 11, les branches 40, 41 sont rappelées élastiquement vers la paroi latérale 35 qui leur est associée. Lorsque le patin de guidage 13 est monté glissant sur le rail de guidage 11, les branches 40, 41 ont donc tendance à s'écarter élastiquement l'une de l'autre.

La paire de branches 40, 41 est par exemple agencée d'un côté opposé aux ailettes extérieures 15b, 21bpar rapport aux ailettes intérieures 15a, 21a.

Chacune des branches 40, 41 comprend une première portion s'étendant depuis l'élément de liaison 14 central, dans un sens opposé l'une par rapport à l'autre, suivant la deuxième direction transversale T2. La première portion des branches 40, 41 peut avantageusement être confondue avec la première nervure 27.

Chacune des branches 40, 41 comprend en outre une deuxième portion 42 s'étendant depuis une extrémité 43 de la première portion opposée à l'élément de liaison 14, dans une direction opposée à l'ailette intérieure 14a, 21a qui lui est adjacente, vers une extrémité libre 44. Les branches 40, 41 sont par exemple chacune en contact avec la paroi latérale 35 qui leur est associée par l'intermédiaire de leur extrémité libre 44.

Les deuxièmes portions 42 des branches 40, 41 peuvent être courbées l'une vers l'autre suivant la deuxième direction transversale T2, lorsque le patin de guidage 13 est monté glissant sur le rail de guidage 11.

Autrement dit, du point de vue de la deuxième portion 42 de l'une des branches 40, 41, la deuxième portion 42 de l'autre des branches 40, 41 est convexe.

La courbure de la deuxième portion 42 des branches 40, 41 permet de donner de l'élasticité auxdites branches 40, 41 qui peuvent de cette manière se déformer élastiquement pour s'adapter aux variations de jeu entre le patin de guidage 13 et le rail de guidage 11 suivant la deuxième direction transversale T2, lorsque le patin de guidage 13 glisse le long du rail de guidage 11.

Les extrémités libres 44 de chacune des branches 40, 41 comprennent par exemple une surface biseautée à chacune de leurs extrémités suivant la ligne longitudinale L, lorsque le patin de guidage 13 est monté glissant sur le rail de guidage 11. Les surfaces biseautées permettent de guider le rail de guidage 11 par rapport au patin de guidage 13, lors de leur montage l'un avec l'autre et ainsi de le faciliter.

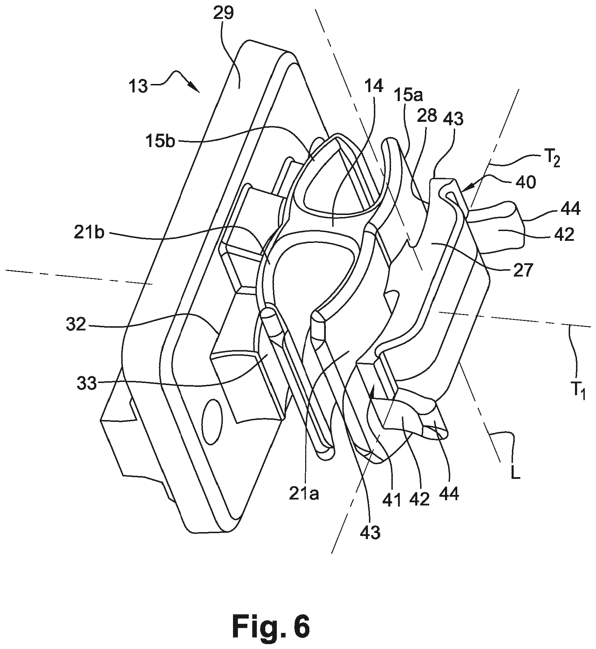

En variante (figure 6), les deuxièmes portions 42 des branches 40, 41 peuvent être de plus petites dimensions suivant la ligne longitudinale L que les premières portions desdites branches 40, 41.

Les extrémités libres 44 de chacune des branches 40, 41 peuvent comprendre une surface biseautée à une seule de leurs extrémités suivant la ligne longitudinale L, lorsque le patin de guidage 13 est monté glissant sur le rail de guidage 11, lesdites extrémités suivant la ligne longitudinale L étant agencées d'un même côté du plan défini par les première et deuxième directions transversales T₁, T₂.

Ainsi, les frottements induits par les branches 40, 41 à l'intérieur du rail de guidage 11 sont réduits, de sorte que l'effort à fournir pour glisser le patin de guidage 13 le long du rail de guidage 11, et donc pour déplacer en translation le meuble 100 sur lequel le patin de guidage 13 est monté, reste limité pour l'utilisateur.

Le patin de guidage 13 présente par exemple un plan de symétrie perpendiculaire à la deuxième direction transversale T2.

Les systèmes de guidage 10 décrits ci-dessus sont particulièrement avantageux car ils permettent de s'adapter aux variations de jeu suivant la première direction transversale T1, voire suivant la première et deuxième direction transversale T2, pouvant intervenir entre le patin de guidage 13 et le rail de guidage 11, lorsque le patin de guidage 13 glisse le long du rail de guidage 11 guidant ainsi en translation le meuble 100.

## Revendications

1. Système de guidage (10) pour un meuble (100) destiné à être monté en translation sur une paroi (201) d'un véhicule de loisirs (200) suivant une ligne de translation, ledit système (10) comprenant :
- un rail de guidage (11) destiné à être monté solidaire sur la paroi (201) du véhicule de loisirs (200), le rail de guidage (11) étant réalisé à partir d'un matériau rigide et comprenant un corps (11a) globalement tubulaire, creux, s'étendant suivant une ligne d'extension longitudinale (L) confondue avec la ligne de translation,
le corps (11a) comprenant une rainure (12) s'étendant suivant la ligne d'extension longitudinale (L) et donnant accès à l'intérieur du corps (11a) suivant une première direction transversale (T1), sensiblement perpendiculaire à la ligne d'extension longitudinale (L),
- un patin de guidage (13) destiné à être monté sur le meuble (100) et conçu pour être monté glissant sur le rail de guidage (11) suivant la ligne d'extension longitudinale (L), de sorte à guider le meuble (100) en translation suivant la ligne d'extension longitudinale (L), lorsque le patin de guidage (13) est monté solidaire sur le meuble (100),
le système de guidage (10) étant **caractérisé en ce que** le patin de guidage (13) est réalisé à partir d'un matériau souple et **en ce que** ledit patin de guidage (13) comprend
- une première paire d'ailettes (15a, 15b) conçues pour glisser le long d'un premier bord longitudinal (18) de la rainure (12) du rail de guidage (11), une ailette (15a), dite ailette intérieure, de la première paire étant située à l'intérieur du corps (11a) du rail de guidage (11), l'autre ailette (15b), dite ailette extérieure, de la première paire étant située à l'extérieur du corps (11a) du rail de guidage (11), lorsque le patin de guidage (13) est monté glissant sur le rail de guidage (11), les ailettes (15a, 15b) de la première paire étant en outre aptes à se déformer élastiquement en flexion suivant la première direction transversale (T1), lorsque le patin de guidage (13) est monté glissant sur le rail de guidage (11) et qu'il glisse le long dudit rail de guidage (11), et
- une deuxième paire d'ailettes (21a, 21b) conçues pour glisser le long d'un deuxième bord longitudinal (24) de la rainure (12) du rail de guidage (11), agencé en regard du premier bord longitudinal (18), une ailette (21a), dite ailette intérieure, de la deuxième paire étant située à l'intérieur du corps (11a) du rail de guidage (11), l'autre ailette (21b), dite ailette extérieure, de la deuxième paire étant située à l'extérieur du corps (11a) du rail de guidage (11), lorsque le patin de guidage (13) est monté glissant sur le rail de guidage (11), les ailettes (21a, 21b) de la deuxième paire étant en outre aptes à se déformer élastiquement en flexion suivant la première direction transversale (T1), lorsque le patin de guidage (13) est monté glissant sur le rail de guidage (11) et qu'il glisse le long dudit rail de guidage (11).

2. Système de guidage (10) selon la revendication 1, dans lequel :
- les ailettes (15a, 15b) de la première paire sont en contact avec le premier bord longitudinal (18) de la rainure (12) du rail de guidage (11), l'une avec une surface intérieure du premier bord longitudinal (18), l'autre avec une surface extérieure du premier bord longitudinal (18), de sorte à pincer élastiquement le premier bord longitudinal (18) de la rainure (12) du rail de guidage (11) ;
ou
- les ailettes (15a, 15b, 21a,21b) de chacune des première et deuxième paires sont en contact avec le premier bord longitudinal (18) ou le deuxième bord longitudinal (24) de la rainure (12) du rail de guidage (11), l'une avec une surface intérieure du premier bord longitudinal (18) ou du deuxième bord longitudinal (24), l'autre avec une surface extérieure du premier bord longitudinal (18) ou du deuxième bord longitudinal (24), de sorte à pincer élastiquement le premier bord longitudinal (18) ou le deuxième bord longitudinal (24) de la rainure (12) du rail de guidage (11).

3. Système de guidage (10) selon l'une des revendications 1 à 2, dans lequel :
- le patin de guidage (13) comprend en outre un élément de liaison (14) s'étendant suivant la première direction transversale (T1), lorsque le patin de guidage (13) est monté glissant sur le rail de guidage (11), et
- les ailettes (15a, 15b) de la première paire s'étendent en regard l'une de l'autre, entre une base (16a, 16b) située au niveau de l'élément de liaison (14) et une extrémité libre (17a, 17b), suivant une deuxième direction transversale (T2), sensiblement perpendiculaire à la première direction transversale (T1) et à la ligne d'extension longitudinale (L), lorsque le patin de guidage (13) est monté glissant sur le rail de guidage (11),
ou
les ailettes (15a, 15b, 21a,21b) de chaque paire s'étendent en regard l'une de l'autre, entre une base (16a, 16b ; 22a, 22b) située au niveau de l'élément de liaison (14) et une extrémité libre (17a, 17b, 23a, 23b), suivant la deuxième direction transversale (T2), dans un sens opposé par rapport à l'autre paire d'ailettes (15a, 15b, 21a, 21b), lorsque le patin de guidage (13) est monté glissant sur le rail de guidage (11).

4. Système de guidage (10) selon la revendication 3, dans lequel les extrémités libres (17a, 17b ; 23a, 23b) des ailettes (15a, 15b ; 21a,21b) de la première paire ou de chaque paire sont plus proches l'une de l'autre que les bases (16a, 16b ; 22a, 22b) desdites ailettes, de sorte que chacune des ailettes (15a, 15b; 21a, 21b) de la première paire et/ou de chaque paire glisse sur le rail de guidage (11) par l'intermédiaire de son extrémité libre (17a, 17b ; 23a, 23b).

5. Système de guidage (10) selon la revendication 4, dans lequel les ailettes (15a, 15b, 21a, 21b) de la première paire ou de chaque paire sont courbées dans un sens opposé l'une par rapport à l'autre suivant la première direction transversale (T1), lorsque le patin de guidage (13) est monté glissant sur le rail de guidage (11).

6. Système de guidage (10) selon l'une des revendications 1 à 5, dans lequel le patin de guidage (13) comprend un premier élément de blocage (27) conçu pour limiter la déformation élastique de la ou de chacune des ailettes intérieures (15a, 21a) suivant la première direction transversale (T1), dans un sens opposé à la ou aux ailettes extérieures (15b, 21b), lorsque le patin de guidage (13) est monté glissant sur le rail de guidage (11) et qu'il glisse le long dudit rail de guidage (11).

7. Système de guidage (10) selon l'une des revendications 3 à 5 combinée à la revendication 6, dans lequel le premier élément de blocage (27) comprend une première nervure s'étendant depuis l'élément de liaison (14) dans un sens opposé à la ou aux ailettes extérieures (15b, 21b), par rapport à la ou aux ailettes intérieures (15a, 15b), la première nervure (27) comprenant une surface de blocage (28) agencée en regard de la ou de chacune des ailettes intérieures (15a, 21a) et conçue pour limiter la déformation élastique de la ou de chacune des ailettes intérieures (15a, 21a) suivant la première direction transversale (T1), dans un sens opposé à la ou aux ailettes extérieures (15b, 21b), lorsque le patin de guidage (13) est monté glissant sur le rail de guidage (11) et qu'il glisse le long dudit rail de guidage (11).

8. Système de guidage (10) selon l'une des revendications 1 à 7, dans lequel le patin de guidage (13) comprend un deuxième élément de blocage (32) conçu pour limiter la déformation élastique de la ou de chacune des ailettes extérieures (15b, 21b) suivant la première direction transversale (T1), dans un sens opposé à la ou aux ailettes intérieures (15a, 21a), lorsque le patin de guidage (13) est monté glissant sur le rail de guidage (11) et qu'il glisse le long dudit rail de guidage (11).

9. Système de guidage (10) selon l'une des revendications 3 à 5 combinée à la revendication 9, dans lequel le patin de guidage (13) comprend un support (29) conçu pour être monté solidaire sur le meuble et à partir duquel s'étend l'élément de liaison (14), le deuxième élément de blocage (32) comprenant une deuxième nervure s'étendant depuis le support (29) vers les ailettes (15a, 15b ; 21a, 21b) et comprenant elle-même une surface de blocage (33) agencée en regard de la ou de chacune des ailettes extérieures (15b, 21b) et conçue pour limiter la déformation élastique de la ou de chacune des ailettes extérieures (15b, 21b) suivant la première direction transversale (T1), dans un sens opposé à la ou aux ailettes intérieures (15a, 21a), lorsque le patin de guidage (13) est monté glissant sur le rail de guidage (11) et qu'il glisse le long dudit rail de guidage (11).

10. Système de guidage (10) selon la revendication 5 combinée à la revendication 7 ou aux revendications 7 et 8 ou à la revendication 9, dans lequel la ou les surfaces de blocage (28, 33) de la première nervure (27) et/ou de la deuxième nervure (32) sont concaves.

11. Système de guidage (10) selon la revendication 1 ou la revendication 1 combinée à l'une quelconque des revendications 2 à 10, dans lequel :
- le corps (11a) du rail de guidage (11) comprend une paroi de fond (34), une paroi de guidage accueillant la rainure (12), opposée à ladite paroi de fond (34), et une paire de parois latérales (35) reliant la paroi de fond (34) à la paroi de guidage, et
- le patin de guidage (13) comprend en outre une paire de branches (40, 41), chacune des branches (40, 41) de ladite paire étant conçue pour glisser le long d'une surface intérieure d'une des parois latérales (35) du corps (11a) du rail de guidage (11), lorsque le patin de guidage (13) est monté glissant sur le rail de guidage (11), lesdites branches (40, 41) étant en outre aptes à se déformer élastiquement en flexion suivant une deuxième direction transversale (T2), sensiblement perpendiculaire à la première direction transversale (T1) et à la ligne d'extension longitudinale (L), lorsque le patin de guidage (13) est monté glissant sur le rail de guidage (11) et qu'il glisse le long dudit rail de guidage (11).

12. Système de guidage (10) selon la revendication 11, dans lequel chacune des branches (40, 41) est en contact avec la surface intérieure de la paroi latérale (35) qui lui est associée.

13. Système de guidage (10) selon la revendication 11 ou la revendication 12, dans lequel :
- le patin de guidage (13) comprend en outre un élément de liaison (14) s'étendant suivant la première direction transversale (T1), lorsque le patin de guidage (13) est monté glissant sur le rail de guidage (11), les ailettes (15a, 15b) de la première paire et les ailettes (21a, 21b) de la deuxième paire s'étendant depuis ledit élément de liaison (14), dans un sens opposé, suivant la deuxième direction transversale (T2),
- la paire de branches (40, 41) est agencée d'un côté opposé aux ailettes extérieures (15b, 21b) par rapport aux ailettes intérieures (15a, 21a),
- chacune des branches (40, 41) comprend une première portion s'étendant depuis l'élément de liaison (14), dans un sens opposé l'une par rapport à l'autre, suivant la deuxième direction transversale (T2), et
- chacune des branches (40, 41) comprend en outre une deuxième portion (42) s'étendant depuis une extrémité (43) de la première portion opposée à l'élément de liaison (14), dans une direction opposée à l'ailette intérieure (14a, 21a) qui lui est adjacente, vers une extrémité libre (44).

14. Système de guidage (10) selon la revendication 13, dans lequel les deuxièmes portions (42) des branches (40, 41) peuvent être courbées l'une vers l'autre suivant la deuxième direction transversale (T2), lorsque le patin de guidage (13) est monté glissant sur le rail de guidage (11).

15. Sous-ensemble comprenant un meuble (100) destiné à être monté en translation sur une paroi (201) d'un véhicule de loisirs (200) suivant une ligne de translation et au moins un système de guidage (10) selon l'une des revendications 1 à 14, comportant un patin de guidage (13) monté solidaire sur le meuble (100).

16. Ensemble comprenant :
- un véhicule de loisirs (200) comprenant une paroi (201),
- au moins un meuble (100),
- au moins un système de guidage (10) selon l'une des revendications 1 à 14, le rail de guidage (11) étant monté solidaire sur la paroi (201) du véhicule de loisirs (200), le patin de guidage (13) étant monté solidaire sur le meuble (100), le patin de guidage (13) étant en outre monté glissant sur le rail de guidage (11) suivant la ligne d'extension longitudinale (L).

## Patentansprüche

1. Führungssystem (10) für ein Möbelstück (100), das dazu vorgesehen ist, entlang einer Schiebelinie verschiebbar an einer Wand (201) eines Freizeitfahrzeugs (200) montiert zu sein, wobei das System (10) umfasst:
- eine Führungsschiene (11), die dazu vorgesehen ist, fest an der Wand (201) des Freizeitfahrzeugs (200) montiert zu sein, wobei die Führungsschiene (11) aus einem steifen Material hergestellt ist und einen im Allgemeinen rohrförmigen, hohlen Körper (11a) umfasst, der sich entlang einer längslaufenden Erstreckungslinie (L) erstreckt, die mit der Schiebelinie zusammenfällt,
wobei der Körper (11a) eine Nut (12) umfasst, die sich entlang der längslaufenden Erstreckungslinie (L) erstreckt und entlang einer ersten Querrichtung (T1), im Wesentlichen senkrecht zu der längslaufenden Erstreckungslinie (L), Zugang zum Inneren des Körpers (11a) gewährt,
- einen Führungsschuh (13), der dazu vorgesehen ist, auf dem Möbelstück (100) montiert zu sein, und konzipiert ist, um entlang der längslaufenden Erstreckungslinie (L) gleitend auf der Führungsschiene (11) montiert zu sein, sodass er das Möbelstück (100) entlang der längslaufenden Erstreckungslinie (L) verschiebbar führt, wenn der Führungsschuh (13) fest auf dem Möbelstück (100) montiert ist,
wobei das Führungssystem (10) **dadurch gekennzeichnet ist, dass** der Führungsschuh (13) aus einem weichen Material hergestellt ist und dass der Führungsschuh (13) umfasst:
- ein erstes Paar Flügel (15a, 15b), die konfiguriert sind, um längs einer ersten Längskante (18) der Nut (12) der Führungsschiene (11) zu gleiten, wobei sich ein Flügel (15a), als innerer Flügel bezeichnet, des ersten Paars im Inneren des Körpers (11a) der Führungsschiene (11) befindet, der andere Flügel (15b), als äußerer Flügel bezeichnet, des ersten Paars sich außerhalb des Körpers (11a) der Führungsschiene (11) befindet, wenn der Führungsschuh (13) gleitend auf der Führungsschiene (11) montiert ist, wobei die Flügel (15a, 15b) des ersten Paars weiter angepasst sein, um sich entlang der ersten Querrichtung (T1) elastisch biegsam zu verformen, wenn der Führungsschuh (13) gleitend auf der Führungsschiene (11) montiert ist und er längs der Führungsschiene (11) gleitet, und
- ein zweites Paar Flügel (21a, 21b), die konfiguriert sind, um längs einer zweiten Längskante (24) der Nut (12) der Führungsschiene (11), die der ersten Längskante (18) zugewandt eingerichtet ist, zu gleiten, wobei sich ein Flügel (21a), als innerer Flügel bezeichnet, des zweiten Paars im Inneren des Körpers (11a) der Führungsschiene (11) befindet, der andere Flügel (21b), als äußerer Flügel bezeichnet, des zweiten Paars sich außerhalb des Körpers (11a) der Führungsschiene (11) befindet, wenn der Führungsschuh (13) gleitend auf der Führungsschiene (11) montiert ist, wobei die Flügel (21a, 21b) des zweiten Paars weiter angepasst sind, um sich entlang der ersten Querrichtung (T1) elastisch biegsam zu verformen, wenn der Führungsschuh (13) gleitend auf der Führungsschiene (11) montiert ist und er längs der Führungsschiene (11) gleitet.

2. Führungssystem (10) nach Anspruch 1, wobei:
- die Flügel (15a, 15b) des ersten Paars die erste Längskante (18) der Nut (12) der Führungsschiene (11) berühren, der eine Innenfläche der ersten Längskante (18), der andere eine Außenfläche der Längskante (18), sodass sie die erste Längskante (18) der Nut (12) der Führungsschiene (11) elastisch einklemmen;
oder
- die Flügel (15a, 15b, 21a, 21b) jedes des ersten Paars und des zweiten Paars die erste Längskante (18) oder die zweite Längskante (24) der Nut (12) der Führungsschiene (11) berühren, der eine Innenfläche der ersten Längskante (18) oder der zweiten Längskante (24), der andere eine Außenfläche der ersten Längskante (18) oder der zweiten Längskante (24), sodass sie die erste Längskante (18) oder die zweite Längskante (24) der Nut (12) der Führungsschiene (11) elastisch einklemmen.

3. Führungssystem (10) nach einem der Ansprüche 1 bis 2, wobei:
- der Führungsschuh (13) weiter ein Verbindungselement (14) umfasst, das sich entlang der ersten Querrichtung (T1) erstreckt, wenn der Führungsschuh (13) gleitend auf der Führungsschiene (11) montiert ist, und
- die Flügel (15a, 15b) des ersten Paars sich einander zugewandt zwischen einer sich am Verbindungselement (14) befindlichen Basis (16a, 16b) und einem freien Ende (17a, 17b) entlang einer zweiten Querrichtung (T2) erstrecken, im Wesentlichen senkrecht zu der ersten Querrichtung (T1) und der längslaufenden Erstreckungslinie (L), wenn der Führungsschuh (13) gleitend auf der Führungsschiene (11) montiert ist,
oder
die Flügel (15a, 15b, 21a, 21b) jedes Paars sich einander zugewandt zwischen einer sich am Verbindungselement (14) befindlichen Basis (16a, 16b; 22a, 22b) und einem freien Ende (17a, 17b, 23a, 23b) entlang der zweiten Querrichtung (T2) in einer in Bezug auf das andere Paar Flügel (15a, 15b, 21a, 21b) entgegengesetzten Richtung erstrecken, wenn der Führungsschuh (13) gleitend auf der Führungsschiene (11) montiert ist.

4. Führungssystem (10) nach Anspruch 3, wobei die freien Enden (17a, 17b; 23a, 23b) der Flügel (15a, 15b; 21a, 21b) des ersten Paars oder jedes Paars näher aneinander sind als die Basen (16a, 16b; 22a, 22b) der Flügel, sodass jeder der Flügel (15a, 15b; 21a, 21b) des ersten Paars und/oder jedes Paars über sein freies Ende (17a, 17b; 23a, 23b) auf der Führungsschiene (11) gleitet.

5. Führungssystem (10) nach Anspruch 4, wobei die Flügel (15a, 15b; 21a, 21b) des ersten Paars oder jedes Paars entlang der ersten Querrichtung (T1) in einer in Bezug aufeinander entgegengesetzten Richtung gekrümmt sind, wenn der Führungsschuh (13) gleitend auf der Führungsschiene (11) montiert ist.

6. Führungssystem (10) nach einem der Ansprüche 1 bis 5, wobei der Führungsschuh (13) ein erstes Sperrelement (27) umfasst, das konzipiert ist, um die elastische Verformung des oder jedes der inneren Flügel (15a, 21a) entlang der ersten Querrichtung (T1) in einer dem oder den äußeren Flügeln (15b, 21b) entgegengesetzten Richtung zu begrenzen, wenn der Führungsschuh (13) gleitend auf der Führungsschiene (11) montiert ist und er längs der Führungsschiene (11) gleitet.

7. Führungssystem (10) nach einem der Ansprüche 3 bis 5 kombiniert mit Anspruch 6, wobei das erste Sperrelement (27) eine erste Rippe umfasst, die sich von dem Verbindungselement (14) ausgehend in einer dem oder den äußeren Flügeln (15b, 21b) entgegengesetzten Richtung in Bezug auf den oder die inneren Flügel (15a, 15b) erstreckt, wobei die erste Rippe (27) eine Sperrfläche (28) umfasst, die dem oder den inneren Flügeln (15a, 21a) zugewandt eingerichtet ist und konzipiert ist, um die elastische Verformung des oder jedes der inneren Flügel (15a, 21a) entlang der ersten Querrichtung (T1) in einer dem oder den äußeren Flügeln (15b, 21b) entgegengesetzten Richtung zu begrenzen, wenn der Führungsschuh (13) gleitend auf der Führungsschiene (11) montiert ist und er längs der Führungsschiene (11) gleitet.

8. Führungssystem (10) nach einem der Ansprüche 1 bis 7, wobei der Führungsschuh (13) ein zweites Sperrelement (32) umfasst, das konzipiert ist, um die elastische Verformung des oder jedes der äußeren Flügel (15b, 21b) entlang der ersten Querrichtung (T1) in einer dem oder den inneren Flügeln (15a, 21a) entgegengesetzten Richtung zu begrenzen, wenn der Führungsschuh (13) gleitend auf der Führungsschiene (11) montiert ist und er längs der Führungsschiene (11) gleitet.

9. Führungssystem (10) nach einem der Ansprüche 3 bis 5 kombiniert mit Anspruch 9, wobei der Führungsschuh (13) eine Stütze (29) umfasst, die konzipiert ist, um fest auf dem Möbelstück montiert zu sein und von der sich das Verbindungselement (14) erstreckt, wobei das zweite Sperrelement (32) eine zweite Rippe umfasst, die sich von der Stütze (29) ausgehend zu den Rippen (15a, 15b; 21a, 21b) hin erstreckt und selbst eine Sperrfläche (33) umfasst, die dem oder den äußeren Flügeln (15b, 21b) zugewandt eingerichtet ist und konzipiert ist, um die elastische Verformung des oder jedes der äußeren Flügel (15b, 21b) entlang der ersten Querrichtung (T1) in einer dem oder den inneren Flügeln (15a, 21a) entgegengesetzten Richtung zu begrenzen, wenn der Führungsschuh (13) gleitend auf der Führungsschiene (11) montiert ist und er längs der Führungsschiene (11) gleitet.

10. Führungssystem (10) nach Anspruch 5 kombiniert mit Anspruch 7 oder den Ansprüchen 7 und 8 oder Anspruch 9, wobei die Sperrfläche oder die Sperrflächen (28, 33) der ersten Rippe (27) und/oder der zweiten Rippe (32) konkav sind.

11. Führungssystem (10) nach Anspruch 1 oder Anspruch 1 kombiniert mit einem der Ansprüche 2 bis 10, wobei:
- der Körper (11a) der Führungsschiene (11) eine Bodenwand (34), eine Führungswand, die die Nut (12) aufnimmt, entgegengesetzt zu der Bodenwand (34) und ein Paar Seitenwände (35), die die Bodenwand (34) mit der Führungswand verbinden, umfasst, und
- der Führungsschuh (13) weiter ein Paar Schenkel (40, 41) umfasst, wobei jeder der Schenkel (40, 41) des Paars konzipiert ist, um längs einer Innenfläche einer der Seitenwände (35) des Körpers (11a) der Führungsschiene (11) zu gleiten, wenn der Führungsschuh (13) gleitend auf der Führungsschiene (11) montiert ist, wobei die Schenkel (40, 41) weiter angepasst sind, um sich entlang einer zweiten Querrichtung (T2), im Wesentlichen senkrecht zu der ersten Querrichtung (T1) und der längslaufenden Erstreckungslinie (L), elastisch biegsam zu verformen, wenn der Führungsschuh (13) gleitend auf der Führungsschiene (11) montiert ist und er längs der Führungsschiene (11) gleitet.

12. Führungssystem (10) nach Anspruch 11, wobei jeder der Schenkel (40, 41) die Innenfläche der Seitenwand (35), die ihm zugeordnet ist, berührt.

13. Führungssystem (10) nach Anspruch 11 oder Anspruch 12, wobei:
- der Führungsschuh (13) weiter ein Verbindungselement (14) umfasst, das sich entlang der ersten Querrichtung (T1) erstreckt, wenn der Führungsschuh (13) gleitend auf der Führungsschiene (11) montiert ist, wobei die Flügel (15a, 15b) des ersten Paars und die Flügel (21a, 21b) des zweiten Paars sich von dem Verbindungselement (14) ausgehend in einer entgegengesetzten Richtung entlang der zweiten Querrichtung (T2) erstrecken,
- das Paar Schenkel (40, 41) auf einer den äußeren Flügeln (15b, 21b) entgegengesetzten Seite in Bezug auf die inneren Flügel (15a, 21a) eingerichtet ist,
- jeder der Schenkel (40, 41) einen ersten Abschnitt umfasst, der sich von dem Verbindungselement (14) ausgehend in einer entgegengesetzten Richtung zueinander entlang der zweiten Querrichtung (T2) erstreckt, und
- jeder der Schenkel (40, 41) weiter einen zweiten Abschnitt (42) umfasst, der sich ausgehend von einem Ende (43) des ersten Abschnitts entgegengesetzt zu dem Verbindungselement (14) in einer Richtung entgegengesetzt zu dem inneren Flügel (14a, 21a), der an ihm angrenzt, zu einem freien Ende (44) hin erstreckt.

14. Führungssystem (10) nach Anspruch 13, wobei die zweiten Abschnitte (42) der Schenkel (40, 41) entlang der zweiten Querrichtung (T2) zueinander gekrümmt sein können, wenn der Führungsschuh (13) gleitend auf der Führungsschiene (11) montiert ist.

15. Teilanordnung, umfassend ein Möbelstück (100), das dazu vorgesehen ist, entlang einer Schiebelinie verschiebbar an einer Wand (201) eines Freizeitfahrzeugs (200) montiert zu sein, und mindestens ein Führungssystem (10) nach einem der Ansprüche 1 bis 14, umfassend einen Führungsschuh (13), der fest auf dem Möbelstück (100) montiert ist.

16. Anordnung, umfassend:
- ein Freizeitfahrzeug (200), umfassend eine Wand (201),
- mindestens ein Möbelstück (100),
- mindestens ein Führungssystem (10) nach einem der Ansprüche 1 bis 14, wobei die Führungsschiene (11) fest an der Wand (201) des Freizeitfahrzeugs (200) montiert ist, wobei der Führungsschuh (13) fest auf dem Möbelstück (100) montiert ist, wobei der Führungsschuh (13) weiter entlang der längslaufenden Erstreckungslinie (L) gleitend auf der Führungsschiene (11) montiert ist.

## Claims

1. A guide system (10) for a piece of furniture (100) intended to be mounted in translation on a wall (201) of a recreational vehicle (200) along a line of translation, said system (10) comprising:
- a guide rail (11) intended to be mounted integrally on the wall (201) of the recreational vehicle (200), the guide rail (11) being made from a rigid material and comprising a hollow, generally tubular body (11a) extending along a longitudinal extension line (L) coincident with the line of translation,
the body (11a) comprising a groove (12) extending along the longitudinal extension line (L) and giving access to the interior of the body (11a) along a first transverse direction (T1), substantially perpendicular to the longitudinal extension line (L),
- a guide shoe (13) intended to be mounted on the piece of furniture (100) and designed to be slidably mounted on the guide rail (11) along the longitudinal extension line (L), so as to guide the piece of furniture (100) in translation along the longitudinal extension line (L), when the guide shoe (13) is integrally mounted on the piece of furniture (100),
the guide system (10) being **characterised in that** the guide shoe (13) is made from a flexible material and **in that** said guide shoe (13) comprises:
- a first pair of fins (15a, 15b) designed to slide along a first longitudinal edge (18) of the groove (12) of the guide rail (11), one fin (15a), referred to as the inner fin, of the first pair being located inside the body (11a) of the guide rail (11), the other fin (15b), referred to as the outer fin, of the first pair being located outside the body (11a) of the guide rail (11), when the guide shoe (13) is slidably mounted on the guide rail (11), the fins (15a, 15b) of the first pair being furthermore capable of elastically deforming in bending along the first transverse direction (T1), when the guide shoe (13) is slidably mounted on the guide rail (11) and when it slides along said guide rail (11), and
- a second pair of fins (21a, 21b) designed to slide along a second longitudinal edge (24) of the groove (12) of the guide rail (11), arranged opposite the first longitudinal edge (18), one fin (21a), referred to as the inner fin, of the second pair being located inside the body (11a) of the guide rail (11), the other fin (21b), referred to as the outer fin, of the second pair being located outside the body (11a) of the guide rail (11), when the guide shoe (13) is mounted so as to slide on the guide rail (11), the fins (21a, 21b) of the second pair also being capable of elastically deforming in bending along the first transverse direction (T1), when the guide shoe (13) is slidably mounted on the guide rail (11) and slides along said guide rail (11).

2. The guide system (10) according to claim 1, wherein:
- the fins (15a, 15b) of the first pair are in contact with the first longitudinal edge (18) of the groove (12) of the guide rail (11), one with an inner surface of the first longitudinal edge (18), the other with an outer surface of the first longitudinal edge (18), so as to elastically pinch the first longitudinal edge (18) of the groove (12) of the guide rail (11);
or
- the fins (15a, 15b, 21a, 21b) of each of the first and second pairs are in contact with the first longitudinal edge (18) or the second longitudinal edge (24) of the groove (12) of the guide rail (11), one with an inner surface of the first longitudinal edge (18) or the second longitudinal edge (24), the other with an outer surface of the first longitudinal edge (18) or the second longitudinal edge (24), so as to elastically clamp the first longitudinal edge (18) or the second longitudinal edge (24) of the groove (12) of the guide rail (11).

3. The guide system (10) according to any of claims 1 to 2, wherein:
- the guide shoe (13) further comprises a connecting member (14) extending along the first transverse direction (T1), when the guide shoe (13) is slidably mounted on the guide rail (11), and
- the fins (15a, 15b) of the first pair extend opposite each other between a base (16a, 16b) located at the connecting member (14) and a free end (17a, 17b) in a second transverse direction (T2), which is substantially perpendicular to the first transverse direction (T1) and the longitudinal extension line (L), when the guide shoe (13) is slidably mounted on the guide rail (11),
or
the fins (15a, 15b, 21a, 21b) of each pair extend opposite each other between a base (16a, 16b; 22a, 22b) located at the connecting member (14) and a free end (17a, 17b, 23a, 23b) in the second transverse direction (T2) in an opposite direction to the other pair of fins (15a, 15b, 21a, 21b) when the guide shoe (13) is slidably mounted on the guide rail (11).

4. The guide system (10) according to claim 3, wherein the free ends (17a, 17b; 23a, 23b) of the fins (15a, 15b; 21a, 21b) of the first pair or each pair are closer to each other than the bases (16a, 16b; 22a, 22b) of said fins, such that each of the fins (15a, 15b; 21a, 21b) of the first pair and/or each pair slides on the guide rail (11) via its free end (17a, 17b; 23a, 23b).

5. The guide system (10) according to claim 4, wherein the fins (15a, 15b, 21a, 21b) of the first pair or each pair are bent in an opposite direction to each other along the first transverse direction (T1), when the guide shoe (13) is slidably mounted on the guide rail (11).

6. The guide system (10) according to any one of claims 1 to 5, wherein the guide shoe (13) comprises a first locking member (27) adapted to limit elastic deformation of said or each inner fin (15a, 21a) along the first transverse direction (T1), in an opposite direction to the outer fin(s) (15b, 21b), when the guide shoe (13) is slidably mounted on the guide rail (11) and slides along said guide rail (11).

7. The guide system (10) according to any one of claims 3 to 5 in combination with claim 6, wherein the first locking member (27) comprises a first rib extending from the connecting member (14) in an opposite direction from the outer fin(s) (15b, 21b), relative to the inner fin(s) (15a, 15b), the first rib (27) comprising a locking surface (28) arranged opposite the or each inner fin (15a, 21a) and adapted to limit elastic deformation of said or each inner fin (15a, 21a) in the first transverse direction (T1), in an opposite direction to the outer fin or fins (15b, 21b), when the guide shoe (13) is slidably mounted on the guide rail (11) and slides along said guide rail (11).

8. The guide system (10) according to any one of claims 1 to 7, wherein the guide shoe (13) comprises a second locking member (32) adapted to limit elastic deformation of said or each outer fin (15b, 21b) along the first transverse direction (T1), in an opposite direction to the inner fin(s) (15a, 21a), when the guide shoe (13) is slidably mounted on the guide rail (11) and slides along said guide rail (11).

9. The guide system (10) according to any one of claims 3 to 5 in combination with claim 9, wherein the guide shoe (13) comprises a support (29) adapted to be integrally mounted on the piece of furniture and from which the connecting member (14) extends, the second locking member (32) comprising a second rib extending from the support (29) towards the fins (15a, 15b; 21a, 21b) and itself comprising a locking surface (33) arranged opposite said or each outer fin (15b, 21b) and designed to limit elastic deformation of the or each outer fin (15b, 21b) in the first transverse direction (T1), in an opposite direction to the inner fin(s) (15a, 21a), when the guide shoe (13) is slidably mounted on the guide rail (11) and slides along said guide rail (11).

10. The guide system (10) according to claim 5 in combination with claim 7 or claims 7 and 8 or claim 9, wherein the locking surface(s) (28, 33) of the first rib (27) and/or the second rib (32) are concave.

11. The guide system (10) according to claim 1 or claim 1 combined with any of claims 2 to 10, wherein:
- the body (11a) of the guide rail (11) comprises a bottom wall (34), a guide wall accommodating the groove (12), opposite said bottom wall (34), and a pair of side walls (35) connecting the bottom wall (34) to the guide wall, and
- the guide shoe (13) further comprises a pair of legs (40, 41), each of the legs (40, 41) of said pair being adapted to slide along an inner surface of one of the side walls (35) of the body (11a) of the guide rail (11), when the guide shoe (13) is slidably mounted on the guide rail (11), said legs (40, 41) being further able to deform elastically in bending along a second transverse direction (T2), substantially perpendicular to the first transverse direction (T1) and the longitudinal extension line (L), when the guide shoe (13) is slidably mounted on the guide rail (11) and slides along said guide rail (11).

12. The guide system (10) according to claim 11, wherein each of the legs (40, 41) is in contact with the inner surface of the side wall (35) associated with it.

13. The guide system (10) according to claim 11 or claim 12, wherein:
- the guide shoe (13) further comprises a connecting member (14) extending along the first transverse direction (T1), when the guide shoe (13) is slidably mounted on the guide rail (11), the fins (15a, 15b) of the first pair and the fins (21a, 21b) of the second pair extending from said connecting member (14) in an opposite direction along the second transverse direction (T2),
- the pair of legs (40, 41) is arranged on an opposite side of the outer fins (15b, 21b) with respect to the inner fins (15a, 21a),
- each of the legs (40, 41) comprises a first portion extending from the connecting member (14) in an opposite direction to each other along the second transverse direction (T2), and
- each of the legs (40, 41) further comprises a second portion (42) extending from an end (43) of the first portion opposite the connecting member (14), in an opposite direction to the inner fin (14a, 21a) adjacent thereto, towards a free end (44).

14. The guide system (10) according to claim 13, wherein the second portions (42) of the legs (40, 41) can be bent towards each other along the second transverse direction (T2), when the guide shoe (13) is slidably mounted on the guide rail (11).

15. A subassembly comprising a piece of furniture (100) intended to be mounted in translation on a wall (201) of a recreational vehicle (200) along a line of translation and at least one guide system (10) according to one of claims 1 to 14, comprising a guide shoe (13) mounted integrally on the piece of furniture (100).

16. An assembly comprising:
- a recreational vehicle (200) comprising a wall (201),
- at least one piece of furniture (100),
- at least one guide system (10) according to one of claims 1 to 14, the guide rail (11) being integrally mounted on the wall (201) of the recreational vehicle (200), the guide shoe (13) being integrally mounted on the piece of furniture (100), the guide shoe (13) being furthermore slidably mounted on the guide rail (11) along the longitudinal extension line (L).
